(19) Europäisches Patentamt
European Patent Office
Office européen des brevets

(11) Publication number: **0 115 163**
**B1**

(12) # EUROPEAN PATENT SPECIFICATION

(45) Date of publication of patent specification: **23.12.87**

(51) Int. Cl.$^4$: **B 32 B 27/08**, B 32 B 27/30, B 32 B 27/32

(21) Application number: **83307780.3**

(22) Date of filing: **20.12.83**

(54) **Barrier films.**

(30) Priority: **28.12.82 US 454203**

(43) Date of publication of application:
**08.08.84 Bulletin 84/32**

(45) Publication of the grant of the patent:
**23.12.87 Bulletin 87/52**

(84) Designated Contracting States:
**BE DE FR GB IT NL**

(56) References cited:
**EP-A-0 063 006**
**WO-A-81/00230**
**FR-A-2 361 223**
**GB-A-1 591 424**
**GB-A-2 006 108**
**US-A-4 254 169**

**"Ullmanns Enzyklopädie der technischen Chemie", 4. Auflage, Band 19, Verlag Chemie 1930, Seiten 46-51**

**The file contains technical information submitted after the application was filed and *not included in this specification***

(73) Proprietor: **MOBIL OIL CORPORATION**
**150 East 42nd Street**
**New York New York 10017 (US)**

(72) Inventor: **Lu, Pang-Chia**
**58 Michelle Lane**
**Belle Mead New Jersey 08502 (US)**

(74) Representative: **Cooper, John Anthony et al**
**Mobil Court 3 Clements Inn**
**London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 115 163 B1**

Courier Press, Leamington Spa, England.

## Description

This invention provides a biaxially oriented multi-layer barrier film having an oxygen barrier layer sandwiched between two layers of polyolefin.

Polypropylene films are common packaging materials in view of their relative low cost and moisture resistance. However, polypropylene has a fairly high permeability to gases, including oxygen. Therefore, films composed entirely of polypropylene are not adequate for packaging oxygen sensitive foods and other materials that degrade in the presence of oxygen or other atmospheric gases.

U.S. Patent No. 4,254,169 describes the use of an ethylene vinyl alcohol layer, as an oxygen barrier layer, sandwiched between two layers of polyolefin in a coextruded multi-layer film. However, the multi-layer film disclosed in this patent is not biaxially oriented.

European Patent Application No. 63006 describes a blend of an ethylene vinyl alcohol copolymer resin with a plasticising agent including polyethyl oxazoline or polyamides which is extrudable to produce a film of uniform caliper and excellent oxygen barrier properties. Again however, the important concept of biaxially orienting the film is not described.

In order to achieve optimal oxygen impermeability in a multi-layer film such as described in the above U.S. Patent, it is necessary to use an ethylene vinyl alcohol copolymer having a relatively high vinyl alcohol to ethylene monomeric ratio. However, such films have extremely poor rheology characteristics as compared with polypropylene films. Consequently, composite films containing polypropylene and such ethylene vinyl alcohol copolymer are not readily biaxially orientable.

According to one aspect of the invention, there is provided a biaxially oriented, polyolefin-containing film structure having oxygen barrier properties, comprising:

(i) two outermost layers composed of oxygen-permeable polyolefin;

(ii) one innermost oxygen barrier layer comprising an ethylene vinyl alcohol copolymer which contains no more than 70 mole percent of copolymerized ethylene, the copolymer having melting and softening temperatures higher than those of the polyolefin layers (i); and

(iii) two adhesion promoting layers interposed between the outermost polyolefin layers and the innermost oxygen barrier layer,

characterised in that the innermost oxygen barrier layer (ii) comprises also, as a compatible blend with the ethylene vinyl alcohol copolymer, a polyamide or polymer of 2-oxazoline having melting and softening temperatures lower than those of the polyolefin layers (i), in an amount sufficient to achieve melting and softening characteristics of the blend so as to render the multi-layer film structure capable of being coextruded and biaxially oriented, the film structure having been formed by coextruding the layers and biaxially orienting the resulting film structure.

According to a preferred aspect of the invention, there is provided a biaxially oriented polypropylene-containing multi-layer film structure having oxygen barrier properties, comprising:

(i) two outermost layers composed of polypropylene;

(ii) an innermost oxygen barrier layer comprising a blend of:

(a) an ethylene vinyl alcohol copolymer which contains from 28 to 36 mole percent of copolymerized ethylene, the remainder being vinyl alcohol; and

(b) poly(ethyloxazoline), and

(iii) two adhesion promoting layers interposed between the polypropylene layers and the innermost oxygen barrier layer, the adhesion promoting layers being composed of an olefin polymer or copolymer blended with a graft copolymer of polyethylene and an unsaturated fused ring carboxylic acid anhydride,

wherein the oxygen barrier layer (ii) constitutes from 5% to 20% by weight of the film structure, the adhesion promoting layers (iii) each constitute from 2% to 10% by weight of the film structure, and wherein the poly(ethyloxazoline) (b) constitutes from 5% to 20% by weight of the blend of ethylene vinyl alcohol copolymer and poly(ethyloxazoline), the film structure having been formed by coextruding the layers and biaxially orienting the resulting film structure.

The multi-layer films according to the invention contain an oxygen barrier layer composed of a blend of ethylene vinyl alcohol and a polyamide or polymer of 2-oxazoline. This oxygen barrier layer may be characterized as a core layer. Due to the excellent oxygen barrier properties associated with the ethylene vinyl alcohol component of this core layer, this layer may be quite thin, in the range of 2.5 µm (0.1 mil) or less, while still obtaining adequate oxygen barrier properties.

Ethylene vinyl alcohol copolymers suitable for use according to the present invention have no more than about 70 mole % of ethylene, the remainder being vinyl alcohol. A preferred ethylene vinyl alcohol copolymer has from 28 to 36 mole % of ethylene.

Kuraray of Japan produces an ethylene vinyl alcohol copolymer under the designation "EP—F" (trademark) which has 32 to 36 mole % ethylene, a molecular weight of 29,500 and a melting point of 180°C (356°F).

Other manufacturers produce suitable ethylene vinyl alochol copolymers. One suitable copolymer has about 29 mole % ethylene, a molecular weight of 22,000, and a melting point of 185°C (365°F).

The polymer which is compatible with ethylene vinyl alcohol may be a polyamide. As used herein the term "polyamide" is intended to connote a homopolymer or copolymer having repeating units of the formula —N—C=O. Examples of such polyamides include nylons. Alternatively the polymer may be a polymer of 2-oxazoline, of the formula

$$-(N-CH_2CH_2)_n$$
$$|$$
$$C=O$$
$$|$$
$$R$$

where R is $C_1$—$C_6$ alkyl and n is at least 100. Polymerization of 2-oxazolines is discussed in Frump, J.A., *Chemical Reviews,* 71, Oct. 1971, pp. 483—505. Dow produces a commercially available poly(ethyloxazoline) where R in the above formula is ethyl.

The amount of polymer which may be blended with ethylene vinyl alcohol is that amount which improves the rheology of the resulting film, such that this film is biaxially orientable with the other layers of the coextruded film. This amount of poly(ethyloxazoline) may be, for example, from 5% to 20% by weight of the ethylene vinyl alcohol/poly(ethyloxazoline) blend.

The oxygen barrier layer is preferably composed entirely of a blend of ethylene vinyl alcohol and polymer (b) and is bonded to the outermost layers of polyolefin by means of adhesion promoting layers.

The adhesion promoting layer which may be used in the present invention is preferably a modified polyolefin as described in U.S. Patent No. 4,254,169. More particularly, such modified polyolefins which form layers adjacent the core layer are blends of polyolefin and a graft copolymer of high density polyethylene (HOPE) with an unsaturated fused ring carboxylic acid anhydride. The polyolefin component of the blend may include a number of resins such as high, medium and low density polyethylene (HOPE, MOPE, LDPE), and polyolefin copolymers such as ethylene vinyl acetate copolymer (EVA) and ethylene acrylic acid (EAA). Modified polyolefin blends are disclosed in U.S. Patent Nos. 4,087,587 and 4,087,588. Suitable modified polyolefin blends are available from the Chemplex Company of Rolling Meadows, Illinois under the name Plexar (trademark). Commercially available grades of such modified polyolefins are blends of the graft copolymer with different polyolefins. These include Plexar-I (trademark), a blend with ethylene vinyl acetate copolymer; Plexar-II (trademark), a blend with high density polyethylene; Plexar-II further modified with an elastomer such as polyisobutylene; and Plexar-III (trademark), a blend with ethylene vinyl acetate polymer adapted for cast film coextrusion. It has been found that these materials coextrude well with extrusion grades of ethylene vinyl alcohol without need for adding materials to either the polyolefin or the core layers in order to obtain the desired level of adhesion between layers.

The melting and softening temperatures of the ethylene vinyl alcohol are generally higher than the melting and softening temperatures of the polyolefin of the outermost layers which are, in turn, higher than the melting and softening temperatures of the polymer (b). Without wishing to be strictly limited to any particular temperatures, the melting point of the ethylene vinyl alcohol may be, e.g., from 170 to 190°C, the melting point of the polyolefin may be from 150 to 170°C and the melting point of the polymer (b) may be from 110 to 150°C. However, when higher melting polyolefins and ethylene vinyl alcohols are used, the melting point of the polymer (b) may be as high as 190°C.

In a preferred process for the production of the multi-layer film, resins, of the polyolefin, modified polyolefin and the core barrier material are melted and coextruded as a cast film. Blown film coextrusion and water quench coextrusion may also be utilized. All such coextrusion processes yield a multi-layer film which has excellent adhesion between the layers and high resistance to passage of gas and moisture. Heat sealing of polyolefin outer layers is readily obtained. Thus, the multilayer film product is well adapted to use in packaging food products as well as many non-food products which require moisture and oxygen barrier packaging.

Biaxial orientation of the coextruded, composite film may take place by any suitable means. In this regard, reference is made to U.S. Patent No. 4,294,935 which describes the biaxial orientation of ethylene vinyl alcohol films.

The multi-layer film of the present invention may have a wide range of thicknesses, such as from 0.0127 to 0.127 mm (0.5 to 5 mils). The oxygen barrier layer may constitute from 5% to 20%, preferably 10% by weight, of the multi-layer film. The adhesion promoting layers may each constitute from 2% to 10%, preferably 5%, by weight of the multi-layer film in equal portions. The remainder of the multi-layer film is preferably constituted by the outermost polyolefin layers in equal portions.

Although the various layers described herein have often been characterized as being "composed of" certain resins, it will be understood that these resins may include minor portions of various additives associated with these resins such as fillers, pigments and stabilizers.

Containers may be made from the multi-layer films of the present invention by heat sealing to form a pouch or by thermoforming to make containers in which foods are packaged and stored.

## Example

PEOX 425 (trademark), a poly(ethyloxazoline) from Dow with a molecular weight of 425,000, was blended with EP—F (trademark), an ethylene vinyl alcohol copolymer from Kuraray containing from 32 to 36 mole % of ethylene and having a molecular weight of 29,500 and a melting point of 180°C (356°F). The amount of PEOX 425 in this blend was about 10% by weight of the blend. This blend was coextruded with a polypropylene having a melting point of about 160°C, sold under the trademark "Arco 8670", and a modified polyolefin adhesive available from Chemplex under the trademark Plexar 2109, to form a composite film of the structure:

PP/Plexar 2109/EF—F + PEOX 425/Plexar 2109/PP

in a weight ratio of approximately 40:5:10:5:40, where PP represents the polypropylene. This coextruded composite film was biaxially oriented.

**Claims**

1. A biaxially oriented, polyolefin-containing film structure having oxygen barrier properties, comprising:

(i) two outermost layers composed of oxygen-permeable polyolefin;

(ii) one innermost oxygen barrier layer comprising an ethylene vinyl alcohol copolymer which contains no more than 70 mole percent of copolymerized ethylene, the copolymer having melting and softening temperatures higher than those of the polyolefin layers (i); and

(iii) two adhesion promoting layers interposed between the outermost polyolefin layers and the innermost oxygen barrier layer,

characterised in that the innermost oxygen barrier layer (ii) comprises also, as a compatible blend with the ethylene vinyl alcohol copolymer, a polyamide or polymer of 2-oxazoline having melting and softening temperatures lower than those of the polyolefin layers (i), in an amount sufficient to achieve melting and softening characteristics of the blend so as to render the multi-layer film structure capable of being coextruded and biaxially oriented, the film structure having been formed by coextruding the layers and biaxially orienting the resulting film structure.

2. A film structure according to claim 1, wherein the polymer (b) is a polyamide.

3. A film structure according to claim 1 or 2, wherein the adhesion promoting layers are composed of a polyolefin polymer or copolymer blended with a graft copolymer of polyethylene and an unsaturated fused ring carboxylic acid anhydride.

4. A film structure according to claims 1, 2 or 3, wherein the ethylene vinyl alcohol copolymer contains 28 to 36 mole % of ethylene.

5. A film structure according to claims 2, 3 or 4, wherein the polyolefin of the outermost layers (i) has a melting point of from 150 to 170°C, the ethylene vinyl alcohol copolymer (a) has a melting point of from 170 to 190°C and polyamide (b) has a melting point of from 110 to 150°C.

6. A biaxially oriented, polypropylene-containing multi-layer film structure having oxygen barrier properties, comprising:

(i) two outermost layers composed of polypropylene;

(ii) an innermost oxygen barrier layer comprising a blend of:

(a) an ethylene vinyl alcohol copolymer which contains from 28 to 36 mole percent of copolymerized ethylene, the remainder being vinyl alcohol; and

(b) poly(ethyloxazoline), and

(iii) two adhesion promoting layers interposed between the polypropylene layers and the innermost oxygen barrier layer, the adhesion promoting layers being composed of an olefin polymer or copolymer blended with a graft copolymer of polyethylene and an unsaturated fused ring carboxylic acid anhydride,

wherein the oxygen barrier layer (ii) constitutes from 5% to 20% by weight of the film structure, the adhesion promoting layers (iii) each constitute from 2% to 10% by weight of the film structure, and wherein the poly(ethyloxazoline) (b) constitutes from 5% to 20% by weight of the blend of ethylene vinyl alcohol copolymer and poly(ethyloxazoline), the film structure having been formed by coextruding the layers and biaxially orienting the resulting film structure.

7. A film structure according to claim 6, wherein the outermost polypropylene layers each constitute about 40% by weight of the film structure, the adhesion promoting layers each constitute about 5% by weight of the film structure and the oxygen barrier layer constitutes about 10% by weight of the film structure.

8. A film structure according to claim 7, wherein the poly(ethyloxazoline) (b) constitutes about 10% by weight of the oxygen barrier layer (ii).

9. A film structure according to claim 8, having a thickness from 0.0127 to 0.127 mm (0.5 to 5 mils).

10. A food container made from the film structure described in any preceding claim.

**Patentansprüche**

1. Biaxial orientierte, polyolefinhaltige Filmstruktur mit Sauerstoffsperreigenschaften, welche umfaßt:

(I) zwei äußere Schichten, die aus sauerstoffdurchläßigem Polyolefin zusammengesetzt sind,

(II) eine innere Sauerstoffsperrschicht, die ein Ethylen-Vinylalkohol-Copolymer umfaßt, das nicht mehr als 70 Mol-% copolymerisiertes Ethylen enthält, wobei das Copolymer eine Schmelz- und Erweichungstemperatur aufweist, die höher als die der Polyolefinschichten (I) ist, und

(III) zwei die Adhäsion fördernde Schichten, die zwischen die äußeren Polyolefinschichten und die innere Sauerstoffsperrschicht zwischengeordnet sind,

dadurch gekennzeichnet, daß die innere Sauerstoffsperrschicht (II) ebenfalls ein Polyamid oder Polymer von 2-Oxazolin mit einer Schmelz- und Erweichungstemperatur geringer als die der Polyolefinschichten (I) als verträgliche Mischung mit dem Ethylen-Vinylalkohol-Copolymer in einer Menge umfaßt, die ausreichend ist, um Schmelz- und Erweichungseigenschaften der Mischung zu erzielen, damit die mehrschichtige Filmstruktur coextrudiert und biaxial orientiert werden kann, wobei die Filmstruktur durch Coextrusion der Schichten und biaxiales Orientieren der resultierenden Filmstruktur gebildet wird.

2. Filmstruktur nach Anspruch 1, worin das Polymer (b) Polyamid ist.

3. Filmstruktur nach Anspruch 1 oder 2, worin die die Adhäsion fördernden Schichten aus einem

Polyolefinpolymer oder -copolymer, vermischt mit einem Pfropfcopolymer von Polyethylen und einem ungesättigten Carboxylsäureanhydrid mit kondensiertem Ring zusammengesetzt sind.

4. Filmstruktur nach Anspruch 1, 2 oder 3, worin das Ethylen-Vinylalkohol-Copolymer 28 bis 36 Mol-% Ethylen enthält.

5. Filmstruktur nach Anspruch 2, 3 oder 4, worin das Polyolefin der äußeren Schichten (I) einen Schmelzpunkt von 150 bis 170°C aufweist, das Ethylen-Vinylalkohol-Copolymer (a) einen Schmelzpunkt von 170 bis 190°C aufweist und das Polyamid (b) einem Schmelzpunkt von 110 bis 150°C hat.

6. Biaxial orientierte, polypropylenhaltige mehrschichtige Filmstruktur mit Sauerstoffsperreigenschaften, welche umfaßt:

(I) zwei äußere Schichten, die aus Polypropylen zusammengesetzt sind,

(II) eine innere Sauerstoffsperrschicht, die eine Mischung von:

(a) einem Ethylen-Vinylalkohol-Copolymer, das von 28 bis 36 Mol-% copolymerisiertes Ethylen enthält, wobei der Rest Vinylalkohol ist und

(b) Poly(ethyloxazolin) umfaßt und

(III) zwei die Adhäsion fördernde Schichten, die zwischen den Polypropylenschichten und der inneren Sauerstoffsperrschicht angeordnet sind, wobei die die Adhäsion fördernden Schichten aus einem Olefinpolymer oder -copolymer, vermischt mit einem Pfropfcopolymer von Polyethylen und einem ungesättigten Carboxylsäureanhydrid mit kondensiertem Ring zusammengesetzt sind,
worin die Sauerstoffsperrschicht (II) von 5 bis 20 Gew-% der Filmstruktur bildet, die die Adhäsion fördernden Schichten (III) jeweils von 2 bis 10 Gew-% der Filmstruktur bilden und worin das Poly(ethyloxazolin) (b) von 5 bis 20 Gew-% der Mischung des Ethylen-Vinylalkohol-Copolymers und des Poly(ethyloxazolins) bildet, wobei die Filmstruktur durch Coextrusion der Schichten und biaxiales Orientieren der resultierenden Filmstruktur gebildet wurde.

7. Filmstruktur nach Anspruch 6, worin die äußeren Polypropylenschichten jeweils etwa 40 Gew-% der Filmstruktur bilden, die die Adhäsion fördernden Schichten jeweils etwa 5 Gew-% der Filmstruktur bilden und die Sauerstoffsperrschicht etwa 10 Gew-% der Filmstruktur bildet.

8. Filmstruktur nach Anspruch 7, worin das Poly(ethyloxazolin) (b) etwa 10 Gew-% der Sauerstoffsperrschicht (II) bildet.

9. Filmstruktur nach Anspruch 8, mit einer Dicke von 0,0127 bis 0,127 mm (0,5 bis 5 mils).

10. Lebensmittelbehälter aus der in einem der vorstehenden Ansprüche beschriebenen Filmstruktur.

**Revendications**

1. Une structure de film contenant une polyoléfine, étirée biaxialement, ayant des propriétés d'imperméablité à l'oxygène, comprenant:

(i) deux couches externes composées de polyoléfine perméable à l'oxygène;

(ii) une couche interne imperméable à l'oxygène comprenant un copolymère éthylène-alcool vinylique qui ne contient pas plus de 70 moles % d'éthylène copolymérisé, le copolymère ayant des températures de fusion et de ramollissement supérieures à celles des couches de polyoléfine (i); et

(iii) deux couches favorisant l'adhérence intercalées entre les couches externes de polyoléfine et la couche interne imperméable à l'oxygène, caractérisée en ce que la couche interne imperméable à l'oxygène (ii) comprend également, sous forme d'un mélange compatible avec le copolymère éthylène-alcool vinylique, un polyamide ou un polymère de 2-oxazoline ayant des températures de fusion et de ramollissement inférieures à celles des couches de polyoléfine (i), en quantité suffisante pour donner au mélange des caractéristiques de fusion et de ramollissement permettant de coextruder et d'étirer biaxialement la structure de film multicouche, la structure de film ayant été formée par coextrusion des couches et étirage biaxial de la structure de film résultante.

2. Structure de film selon la revendication 1, dans laquelle le polymère (b) est un polyamide.

3. Structure de film selon la revendication 1 ou 2, dans laquelle les couches favorisant l'adhérence sont composées d'un polymère ou copolymère de polyoléfine en mélange avec un copolymère greffé de polyéthylène et d'un anhydride d'acide carboxylique insaturé à noyau condensé.

4. Structure de film selon les revendications 1, 2 ou 3, dans laquelle le copolymère éthylène-alcool vinylique contient 28 à 36 moles % d'éthylène.

5. Une structure de film selon les revendications 2, 3 ou 4, dans laquelle la polyoléfine des couches externes (i) a un point de fusion de 150 à 170°C, le copolymère éthylène-alcool vinylique (a) a un point de fusion de 170 à 190°C et le polyamide (b) a un point de fusion de 110 à 150°C.

6. Une structure de film multicouche contenant du polypropylène, étirée biaxialement, ayant des propriétés d'imperméabilité à l'oxygène, comprenant:

(i) deux couches externes composées de polypropylène;

(ii) une couche interne imperméable à l'oxygène comprenant un mélange de:

(a) un copolymère éthylène-alcool vinylique qui contient de 28 à 36 moles % d'éthylène copolymérisé, le reste étant de l'alcool vinylique; et

(b) de la poly(éthyloxazoline), et

(iii) deux couches favorisant l'adhérence intercalées entre les couches de polypropylène et la couche interne imperméable à l'oxygène, les couches favorisant l'adhérence étant composées d'un polymère ou copolymère d'oléfine en mélange avec un copolymère greffé de polyléthylène et d'un anhydride d'acide carboxylique insaturé à noyau condensé,
dans laquelle la couche imperméable à l'oxygène (ii) constitue 5 à 20% en poids de la structure de film, les couches favorisant l'adhérence (iii) constituent chacune de 2 à 10% en poids de la structure de film et la poly(éthyloxazoline) (b) constitue de 5 à 20% en poids du mélange de copolymère éthylène-alcool vinylique et de poly-(éthyloxazoline), la structure de film ayant été formée par coextrusion des couches et étirage biaxial de la structure de film résultante.

7. Une structure de film selon la revendication 6, dans laquelle les couches externes de polypropylène constituent chacune environ 40% en poids de la structure de film, les couches favorisant l'adhérence constituent chacune environ 5% en poids de la structure de film et la couche imperméable à l'oxygène constitue environ 10% en poids de la structure de film.

8. Une structure de film selon la revendication 7, dans laquelle la poly(éthyloxazoline) (b) constitue environ 10% en poids de la couche imperméable à l'oxygène (ii).

9. Une structure de film selon la revendication 8, ayant une épaisseur de 0,0127 à 0,127 mm (0,5 à 5 mils).

10. Récipient alimentaire fabriqué avec la structure de film décrite dans l'une quelconque des revendications précédentes.